# EUROPEAN PATENT SPECIFICATION

(11) **EP 0 761 101 B1**
(45) Date of publication and mention of the grant of the patent: **10.07.2002**
(21) Application number: 96202431.1
(22) Date of filing: 02.09.1996
(51) Int. Cl.: A23C 19/05, A23C 19/055, A23C 19/09

(54) **A method for making cheese or a cheese-like product and cheese or cheese-like product obtained thereby**
Verfahren zur Herstellung von Käse oder eines Käse-ähnliches Produktes und auf diese Weise hergestellter Käse oder Käse-ähnliches Produkt
Procédé de préparation d'un fromage ou substitut de fromage et fromage ou substitut de fromage ainsi obtenu

(30) Priority: 05.09.1995 NL 1001132
(43) Date of publication of application: 12.03.1997
(73) Proprietor: Food Creations B.V., 5212 AA 's-Hertogenbosch (NL)
(72) Inventor: Kodde, Marinus Willem, 5212 AA 's-Hertogenbosch (NL); Komen, Johannes Petrus Maria, 5237 EW 's-Hertogenbosch (NL)
(74) Representative: Kupecz, A., Drs. c.s.

(56) References cited:
- WO-A-95/00032
- DE-A- 2 129 213
- GB-A- 1 290 059
- NL-A- 7 804 456
- NL-A- 9 101 341
- W. ABOU EL-ELLA: "Hard cheese substitute from soy milk" JOURNAL OF FOOD SCIENCE, vol. 45, no. 6, pages 1777-1778, XP002083348 CHICAGO US
- PATENT ABSTRACTS OF JAPAN vol. 005, no. 024 (C-043), 13 February 1981 & JP 55 150844 A (MORINAGA & CO LTD), 25 November 1980

## Description

The present invention relates to a method for making cheese or a cheese-like product in accordance with the preamble of claim 1, as well as to cheese or a cheese-like product obtainable by applying the above-mentioned method.

A method according to the preamble of claim 1 is known from WO 95/00032. WO 95/00032 relates to a reduced fat renneted cheese product and a process of manufacturing it. As described in Example 1 a Gouda type cheese product is made applying a usual Gouda cheesemaking procedure, using washed quark..

Further, WO 93/02565 describes a method of preparing cheese by adding yoghurt comprising live yoghurt bacteria to milk to be curdled.

DE-2.129.213 describes a method of. making cheese involving an acceleration of the process of cheese production by processing of a milk containing a higher protein content.

W. Abou El-Ella: "Hard cheese substitute from soy milk" Journal of food science, vol. 45, no. 6, pages 1777-1778, XP002083348 Chicago US, describes a cheese substitute made from soy milk.

The methods of cheese making according to the prior art provide cheeses, which are generally eaten with cold meals or as snacks, for instance pizza. When cheese or a cheese-like product prepared in this way is heated, the cheese or cheese-like product becomes runny and after cooling becomes tough. The known cheeses are actually not suitable for frying or deep-frying. Another disadvantage of the known cheeses is the fact that their preparation involves a long maturation time, namely from 3 weeks to 16 months in order to obtain a structure reminiscent of mature cheese, so that extra expensive storage space is needed which, from an economic viewpoint, is undesirable.

It is now the aim of the invention to provide a method producing a cheese-like product which is particularly suitable for heating, such as frying, deep-frying, etc.

To this end the invention provides a method as mentioned above and which is characterized by the method steps as defined in the claim 1.

According to the invention, the non-matured cheese product added is pot cheese, cottage cheese or similar product, being added in an amount of 5-50% by weight, and preferably in an amount of 17-30% by weight based on the amount of milk.

surprisingly the method according to the invention was shown to produce a cheese which is particularly suitable for heating in a casserole or frying pan with or without oil or fat. This product is also exceptionally suitable for baking without any problem, even without oil or fat, in the oven or microwave oven. In addition, this product may be deep-fried in oil or fat.

According to the method of the invention, maturing of the cheese or cheese-like product only takes 1-7 weeks, yielding cheese or a cheese-like product having a hard outer layer and a relatively soft centre.

It was further shown that the cheese or cheese-like product keeps particularly well both in the refrigerator and outside the refrigerator. Moreover, the cheese product according to the invention freezes very well suffering hardly any deterioration of taste, smell and other characteristics.

A special property of the cheeses according to the invention is that when fried or heated otherwise with or without oil or fat, they receive a crisp outer layer with a soft centre, with a particularly pleasing and savory cheese flavour.

It has been shown that the consumer is particularly fond of fried cheese, for instance in the form of slices or cubes, having a crisp outer layer and a soft centre, which centre, however, is not runny. Due to these properties the cheese or cheese-like product can, after frying, be eaten without messing during consumption. The texture of the soft centre is rated favourably by the consumer.

With the method according to the invention the milk used is animal milk or a mixture of animal milk and milk of vegetable origin.

As animal milk cow's milk, goat's milk, sheep's milk, etc is suitable or a mixture thereof.

It has been shown that according to the invention the cow's milk may be whole milk or skimmed milk, while particularly good results are obtained with skimmed milk, irrespective of its percentage of fat.

It is also surprising that milk of vegetable origin, such as coconut milk and especially soya milk can be used, albeit in combination with animal milk.

If any substance of vegetable origin is added to animal milk, then one speaks of a cheese-like product.

For the rest the cheese or cheese-like product according to the invention is prepared in a manner known as such, on the understanding that the cheese or cheese-like product thus obtained is allowed to mature for 1-7 weeks.

Finally, the present invention relates to cheese or a cheese-like product obtainable by application of the method according to the invention.

It is noted, that the thus obtained cheeses are expected to be highly appreciated by the consumer and that instead of meat products one will choose such cheese products, the more so as lately, despite strict controls in animal breeding, hormones are often employed of which it is known that they may be damaging to health, giving meat in any case a negative image. Of course, such problems do not exist with cheese.

The invention will be further elucidated by the following Example.

### Example

In this Example the basis was provided by 45 litre milk, which after weighing was pasteurized and subsequently cooled.

Pasteurizing was carried out by introducing steam into the double wall of the tank into which the milk is put, at a temperature of about 76°C.

Cooling took place by introducing tap-water into the same double wall, until the milk had reached a temperature of about 36°C. The water was then let out from the wall, followed by rinsing with hot water to prevent the milk from further cooling.

Subsequently, as extra (curdling) substance about 20% by weight of pot cheese was added while stirring vigorously, yielding a homogeneous milk-pot cheese mixture. Then, while stirring, half a beaker acidifier concentrate, 9 ml rennet, 9 ml CaCl₂ was added to the homogeneous mixture, which was left to coagulate at 32°C for 30 minutes.

This yielded a curd mass which was then cut to the desired curd size.

Then the so-called first whey, 50% of the original milk, was drawn off. After that 8.5 kg warm water at about 76°C was added to the remaining whey-curd mass, in order to wash (twice) the whey-curd mass. After about 1 minute the temperature was adjusted by means of hot or cold water to about 36°C. The 2 g KNO₃ per 40 litre milk was added to the wash water. The thus obtained mixture was stirred for 40 minutes until the curds had a size of about 0.5 cm and until the curds could be formed into a ball which fell apart when tapped lightly with a finger.

Then the remaining whey was drawn off. The residual curds were subsequently brought into chessels.

The chessels were then subjected to pressure, at first without pending weights.

Now and again the curd in the chessels was turned.

Subsequently the cheese or cheese-like product was put into brine having a pH of about 5.2, a concentration of about 18.32 weight % (Be) and a temperature of about 15°C for about 36 hours.

Then the cheese or cheese-like product was left to dry in the cheese cell for about 2 days at a temperature of about 15°C and a relative humidity of about 80.

Using a sponge, the cheese or cheese-like product was then lightly plasticized by applying a thin layer of plastic to one side of the cheese or cheese-like product, then, after a few days the cheese or cheese-like product was turned and the side of the cheese or cheese-like product not yet plasticized was subjected to a similar plasticizing process.

Finally the cheese or cheese-like product was left to mature for 1 to 7 weeks, yielding a cheese or cheese-like product having a hard outer layer of about 1 mm thickness and a relatively soft centre.

This cheese or cheese-like product proved to be particularly suitable for frying with or without oil or fat, giving a particularly tasty cheese or cheese-like product having a crisp golden brown outer layer and a soft non-runny centre, which cheese or cheese-like product has a very pleasant savory taste and is especially suitable as a meat substitute. It is moreover surprising that the crisp outer layer is obtained without a breadcrumb coating or any other similar pretreatment.

## Claims

1. A method for making cheese or a cheese-like product made from pasteurized or non-pasteurized milk, comprising the steps of adding substances generally used for making cheese such as rennet, acidifier, CaCl₂, and adding a non-matured soft cheese product to the milk, **characterized in that** the method further comprises the steps of maturing the cheese of cheese-like product for 1-7 weeks, and frying the said product so as to obtain a cheese of a cheese-like product having a hard outer layer and a relatively soft center.

2. A method according to claim 1, **characterized in that** the non-matured cheese product added is pot cheese, cottage cheese or similar product, being added in an amount of 5-50% by weight, and preferably in an amount of 17-30% by weight based on the amount of milk.

3. A method according to claim 1 or 2, **characterized in that** the non-matured soft cheese product is added in an amount of 5-50% by weight, based on the amount of milk.

4. A method according to claim 3, **characterized in that** the non-matured soft cheese product is added in an amount of 17-30% by weight.

5. A method according to claims 1-4, **characterized in that** the milk used for addition is animal milk or a mixture of animal milk and milk of vegetable origin.

6. A method according to claim 5, **characterized in that** the animal milk used is cow's milk, goat's milk, sheep's milk,

7. A method according to claim 6 , **characterized in that** the cow's milk is whole milk or skimmed milk, or contains any other percentage of fat.

8. A method according to claim 5, **characterized in that** the mixture of animal and milk of vegetable origin used is a mixture of cow's milk, goat's milk, sheep's milk on the one hand and soya milk, coconut milk on the other hand.

9. A cheese or cheese-like products obtainable by applying the method according to any of the preceding claims, and having a hard outer layer and a relatively soft center.

## Patentansprüche

1. Verfahren zur Herstellung von Käse oder eines käseartigen Produktes, hergestellt aus pasteurisierter oder nichtpasteurisierter Milch, das die Schritte umfasst, Substanzen, die im allgemeinen zur Herstellung von Käse verwendet werden, wie beispielsweise Labferment, Säuerungsmittel, CaCl₂, zuzusetzen, und ein nicht gereiftes Weichkäseprodukt der Milch zuzusetzen,
**dadurch gekennzeichnet, dass** das Verfahren weiterhin die Schritte umfasst, den Käse oder das käseartige Produkt 1 bis 7 Wochen lang zu reifen und das Produkt zu braten, so dass ein Käse oder ein käseartiges Produkt gewonnen wird, das eine harte Außenschicht und ein relativ weiches Zentrum aufweist.

2. Verfahren nach Anspruch 1, **dadurch gekennzeichnet, dass** das zugesetzte nicht gereifte Käseprodukt Topfkäse, Hüttenkäse oder ein ähnliches Produkt ist, das in einer Menge von 5-50 Gew.-% und bevorzugt in einer Menge von 17-30 Gew.-% auf Grundlage der Milchmenge zugesetzt wird.

3. Verfahren nach Anspruch 1 oder 2, **dadurch gekennzeichnet, dass** das nicht gereifte Weichkäseprodukt in einer Menge von 5-50 Gew.-% auf Grundlage der Milchmenge zugesetzt wird.

4. Verfahren nach Anspruch 3, **dadurch gekennzeichnet, dass** das nicht gereifte Weichkäseprodukt in einer Menge von 17-30 Gew.-% zugesetzt wird.

5. Verfahren nach Anspruch 1-4, **dadurch gekennzeichnet, dass** die zur Zusetzung verwendete Milch tierische Milch oder ein Gemisch aus tierischer Milch und Milch pflanzlichen Ursprungs ist.

6. Verfahren nach Anspruch 5, **dadurch gekennzeichnet, dass** die verwendete tierische Milch Kuhmilch, Ziegenmilch oder Schafmilch ist.

7. Verfahren nach Anspruch 6, **dadurch gekennzeichnet, dass** die Kuhmilch Vollmilch oder Magermilch ist oder irgendeinen anderen Prozentgehalt an Fett enthält.

8. Verfahren nach Anspruch 5, **dadurch gekennzeichnet, dass** das verwendete Gemisch aus tierischer Milch und Milch pflanzlichen Ursprungs ein Gemisch aus Kuhmilch, Ziegenmilch, Schafmilch einerseits und Sojamilch, Kokosmilch andererseits ist.

9. Käse oder käserartiges Produkt, das durch Anwendung des Verfahrens nach einem der vorhergehenden Ansprüche gewinnbar ist, und das eine harte Außenschicht und ein relativ weiches Zentrum aufweist.

## Revendications

1. Procédé de préparation d'un fromage ou d'un produit similaire au fromage préparé à partir de lait pasteurisé ou non pasteurisé, comprenant les étapes consistant à ajouter des substances généralement utilisées pour préparer du fromage telles que de la présure, un acidifiant, du CaCl₂, et à ajouter un produit fromager à pâte molle non maturé au lait, **caractérisé en ce que** le procédé comprend en outre les étapes consistant à maturer le fromage du produit similaire au fromage pendant 1 à 7 semaines, et à faire frire ledit produit de manière à obtenir un fromage d'un produit similaire au fromage ayant une couche extérieure dure et un coeur relativement mou.

2. Procédé selon la revendication 1, **caractérisé en ce que** le produit fromager non maturé ajouté est du fromage blanc, du fromage frais ou un produit similaire, ajouté en une quantité comprise entre 5 et 50 % en poids, et de préférence en une quantité comprise entre 17 et 30 % en poids en se basant sur la quantité de lait.

3. Procédé selon la revendication 1 ou 2, **caractérisé en ce que** le produit fromager à pâte molle non maturé est ajouté en une quantité comprise entre 5 et 50 % en poids en se basant sur la quantité de lait.

4. Procédé selon la revendication 3, **caractérisé en ce que** le produit fromager à pâte molle non maturé est ajouté en une quantité comprise entre 17 et 30 % en poids.

5. Procédé selon les revendications 1 à 4, **caractérisé en ce que** le lait utilisé pour l'ajout est du lait d'animal ou un mélange de lait d'animal et de lait d'origine végétale.

6. Procédé selon la revendication 5, **caractérisé en ce que** le lait d'animal utilisé est du lait de vache, du lait de chèvre ou du lait de brebis.

7. Procédé selon la revendication 6, **caractérisé en ce que** le lait de vache est du lait entier ou du lait écrémé, ou qu'il contient n'importe quel autre pourcentage de graisse.

8. Procédé selon la revendication 5, **caractérisé en ce que** le mélange de lait d'origine animale et d'origine végétale utilisé est un mélange de lait de vache, de lait de chèvre, de lait de brebis d'une part, et de lait de soya et de lait de noix de coco d'autre part.

9. Fromage ou produit similaire au fromage pouvant être obtenu en appliquant le procédé selon l'une quelconque des revendications précédentes, et ayant une couche extérieure dure et un coeur relativement mou.
